Europäisches Patentamt

(19) European Patent Office

Office européen des brevets

(11) Publication number: **0 107 980**
**B1**

(12) EUROPEAN PATENT SPECIFICATION

(45) Date of publication of patent specification: 18.01.89

(21) Application number: 83306598.0

(22) Date of filing: 28.10.83

(51) Int. Cl.⁴: **H 04 L 27/20**

(54) Phase modulation method and apparatus.

(30) Priority: 29.10.82 JP 190398/82

(43) Date of publication of application:
09.05.84 Bulletin 84/19

(45) Publication of the grant of the patent: ·
18.01.89 Bulletin 89/03

(84) Designated Contracting States:
DE FR GB IT NL

(56) References cited:
US-A-3 378 637
US-A-3 706 945

PATENTS ABSTRACTS OF JAPAN, vol. 5, no.
121 (E-68)793r, 5th August 1981; & JP - A - 56
60149

IEEE, INTERNATIONAL CONFERENCE ON
COMMUNICATIONS, 16th-18th June 1975, San
Francisco, pages 36-17-36-21, IEEE, New York,
US; W.J. WEBER: "The use of TWT amplifiers in
M-ary amplitude and phase shift keying
systems"

(73) Proprietor: FUJITSU LIMITED
1015, Kamikodanaka Nakahara-ku
Kawasaki-shi Kanagawa 211 (JP)

(72) Inventor: Ashida, Hideo
51-1 Kozukue-cho Kohoku-ku
Yokohama-shi Kanagawa 222 (JP)

(74) Representative: Skone James, Robert Edmund
et al
GILL JENNINGS & EVERY 53-64 Chancery Lane
London WC2A 1HN (GB)

Description

This invention relates to a phase modulation method and apparatus for use in a digital communication system.

Multiple phase shift keying (MPSK) is a well known modulation system in which there are as many phase positions of a carrier wave as there are digital information input code elements. For example, with a quaternary code there are four different phase positions, ie. 0°, 90°, 180°, and 270° of the carrier wave. In such a modulation system it is required that the phase positions of the modulated waves be exactly equal to the desired phase positions and that the amplitude of the modulated waves in the different phase positions be maintained at a constant value.

JP—A—56—60149 describes a known multiple phase shift keying system in which the modulated waves are fed to a high output amplifier. The problem which this system addresses is that the high output amplifier exhibits a non-linear response when operated in its saturation range and the system provides a pre-compensating circuit upstream of the signal modulator to adjust the amplitude of the carrier wave prior to the modulation step. The adjustment of amplitude is determined in accordance with the digital input signal which is also used to modulate the phase of the carrier wave.

A paper entitled "The Use of TWT Amplifiers in M-ARY Amplitude and Phase Shift Keying Systems" published in IEEE, International Conference on Communications, 16th—18th June 1985, pages 36—17 to 36—21 describes a similar multiphase modulating transmitter to that described in the Japanese publication mentioned above. Once again, the problems of non-linearities in the output amplifier, in particular a TWT amplifier, are dealt with in a precompensating circuit.

It has been found, however, that in addition to the problems of output amplifiers dealt with by the systems described above, the components in a phase modulator exhibit a difference in characteristics so that the phase positions of the modulated waves deviate from the desired phase positions. For example, in the case of a quadrature phase shift keying (QPSK) system, the phase differences of the modulated waves between neighbouring phase positions would not be equal to 90°. Furthermore, because of the differences in charactersitics of the components, the amplitude of the modulated waves in the different phase positions cannot be equally controlled.

It is, therefore, an object of the present invention to provide a phase modulation method and apparatus whereby modulated waves can be easily obtained without error in the phase positions and/or deviation in amplitude.

- According to a first aspect of the present invention, a method of generating a phase modulated wave in which the phase of a carrier wave is modulated in accordance with a binary modulating signal to produce the modulated wave is characterised by the step of correcting errors in the amplitude and/or phase of the modulated wave introduced during the modulation step by correcting the amplitude and/or the phase of the carrier wave or the modulated wave by predetermined amounts in response to the value of the binary modulating signal.

According to a second aspect of the present invention, a method of generating a phase modulated wave in which the phase of a carrier wave is modulated in accordance with a binary modulating signal to produce the modulated wave, is characterised by the steps of producing, in response to the value of the binary modulating signal, at least one control signal; and correcting errors in the amplitude and/or phase of the modulated wave introduced during the modulation step by correcting, in accordance with the produced control signal or signals, the amplitude and/or the phase of the carrier wave or the modulated wave, whereby the phase position of the modulated waves becomes equal to one of a number of predetermined positions and the amplitudes of the modulated waves coincide.

According to a third aspect of the invention, phase modulation apparatus comprising modulator means for modulating the phase of a carrier wave in accordance with a binary modulating signal to produce a modulated wave; is characterised by means for producing, in response to the value of the binary modulating signal, at least one control signal; and means, coupled to the modulator means and to the control signal producing means, for correcting the amplitude and/or the phase of the carrier wave or the modulated wave, in accordance with the control signal from the producing means in order to compensate for errors in the amplitude and/or phase of the modulated wave introduced by the modulator means, whereby the phase position of the modulated waves becomes equal to one of a number of predetermined positions and the amplitudes of the modulated waves are made to coincide.

By use of the present invention, error in the phase position of modulated waves and/or deviation in the amplitude of the modulated waves due to the modulator means can be easily suppressed. That is, a phase modulation system with good modulation charactersitics can be obtained. Furthermore, a phase modulator having modulation characteristics can be used in this phase modulation system without deteriorating the modulation characteristics of the output from this system.

Embodiments of the invention will now be described, by way of example, with reference to the accompanying drawings, in which:—

Figure 1 is a block diagram of a first embodiment of the invention;

Figures 2 and 3 are circuit diagrams of examples of different forms of quadrature phase modulator for use in the apparatus of Figure 1;

Figure 4 is a circuit diagram of an example of a control signal generator for use in the apparatus of Figure 1;

Figures 5 and 6 are circuit diagrams of examples of different forms of variable phase shifter for use in the apparatus of Figure 1;

Figure 7 is a circuit diagram of an example of a variable attenuator for use in the apparatus of Figure 1;

Figures 8a, 8b are diagrams for explaining error in the phase position of, and deviation of the amplitude of, modulated waves; and

Figures 9 to 13 are block diagrams of second to sixth embodiments of the present invention.

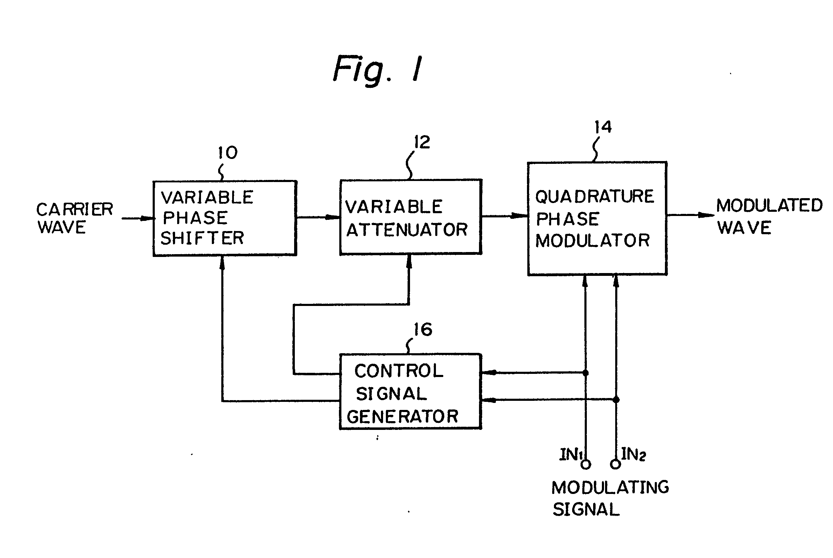

Referring to Figure 1, which illustrates a first embodiment of the present invention, a phase modulation apparatus comprises a variable phase shifter 10, a variable attenuator 12, a quadrature phase modulator 14 and a control signal generator 16. The variable phase shifter 10 shifts the phase of a carrier wave applied thereto in accordance with the voltage of a first control signal which is applied from the control signal generator 16. The variable attenuator 12 controls the amplitude of the carrier wave from the variable phase shifter 10 in accordance with the voltage of a second control signal which is applied from the control signal generator 16. The quadrature phase modulator 14 modulates the phase of the carrier wave from the variable attenuator 12 in accordance with a modulating signal which is composed of a two-bit binary signal which is applied via input terminals $IN_1$ and $IN_2$. Therefore, in this embodiment, a modulated wave has one of four different phase positions, i.e. 0°, 90°, 180° and 270°, depending upon the modulating signal. The control signal generator 16 produces, in response to the modulating signal, the first and second control signals which control the variable phase shifter 10 and the variable attenuator 12, respectively.

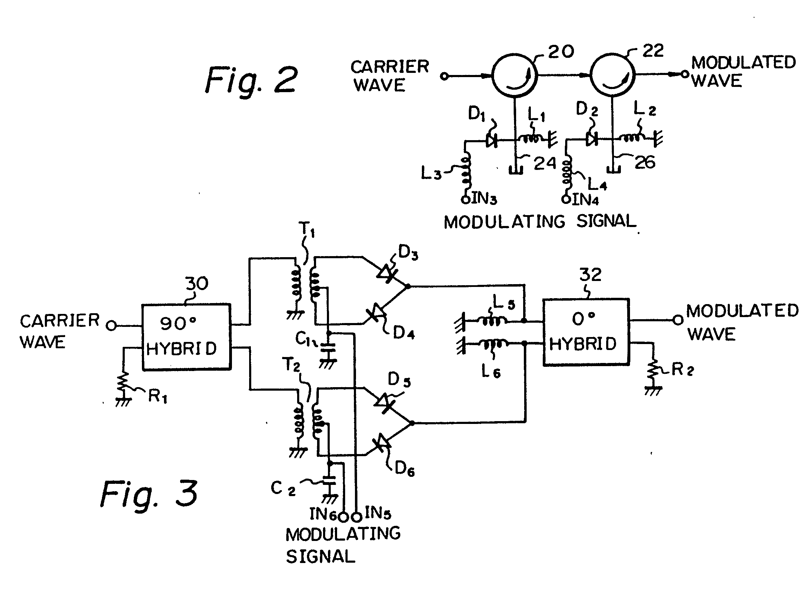

Figures 2 and 3 illustrate examples of the quadrature phase modulator 14 in Figure 1.

The quadrature phase modulator shown in Figure 2 is used in the microwave band and has two circulators 20 and 22. The circulator 20 receives a carrier wave and the circulator 22 outputs a modulated wave. Stubs 24 and 26, each of which has a shorted end, are connected to the circulators 20 and 22, respectively. The stubs 24 and 26 are designed so that the length of the stub 24 is equal to one-fourth of the carrier wavelength ($\lambda$/4) and the length of the stub 26 is equal to one-eighth of carrier wavelength ($\lambda$/8). Diodes $D_1$ and $D_2$, such as PIN-diodes, are provided on the stubs 24 and 26, respectively. The diode $D_1$ and chokes $L_1$ and $L_3$ are connected in series between an input terminal $IN_3$ and the ground. The diode $D_2$ and chokes $L_2$ and $L_4$ are connected in series between an input terminal $IN_4$ and the ground. When the modulating signal applied to the input terminal $IN_3$ is the high (H) level, the diode $D_1$ turns on, causing the carrier wave from the circulator 20 to return at the diode $D_1$, and the phase of the carrier wave is not shifted. When the modulating signal applied to the input terminal $IN_3$ is low (L) level, the diode $D_1$ turns off and the phase of the carrier wave is shifted by 180°. Similarly to this, when the modulating signal applied to the input terminal $IN_4$ is the H level, the phase of the carrier wave is not shifted, and when L level, the phase is shifted by 90°. Therefore, the phase of the carrier wave changes to four different phase positions of 0°, 90°, 180°, and 270° in response to the modulating signal.

However, since forward impedances of the diodes $D_1$ and $D_2$ are not perfectly zero during the on-state and are not perfectly infinity during the off-state and, furthermore, since there exist parasitic inductance and capacitance, phase positions of the wave modulated by a quadrature phase modulator as shown in Figure 2 have errors, and the amplitude of the modulated waves in the phase positions are not equal. Therefore, if a phase modulation system is constructed only by the quadrature phase modulator shown in Figure 2, the aforementioned problems of the prior art occur.

The quadrature phase modulator shown in Figure 3 is used both in the microwave band and intermediate frequency band. In this modulator, a 90° hybrid 30 receives a carrier wave and produces carrier waves having phase differences of 0° and 90° with respect to the received carrier. The outputs having phases of 0° and 90° from the 90° hybrid 30 are applied to primary windings of transformers $T_1$ and $T_2$, respectively. Diodes $D_3$ and $D_4$ are connected in series to a secondary winding of the transformer $T_1$, and diodes $D_5$ and $D_6$ are connected in series to a secondary winding of the transformer $T_2$. Input terminals $IN_5$ and $IN_6$ are connected to mid-points of the secondary windings of the transformers $T_1$ and $T_2$, respectively. In Figure 3, furthermore, $R_1$ and $R_2$ denote dummy end resistors, $C_1$ and $C_2$ denote capacitors, and $L_5$ and $L_6$ denote chokes. When the modulating signal applied to the input terminal $IN_5$ is at H or L level, the diode $D_3$ or $D_4$ turns on. Therefore, the carrier wave having the phase of 0°, which was applied to the transformer $T_1$, is shifted by 0° or 180° in response to the modulating signal applied to the input terminal $IN_5$. Also, when the modulating signal applied to the input terminal $IN_6$ is at H or L level, the diode $D_5$ or $D_6$ turns on. Thus, the carrier wave having the phase of 90°, which was applied to the transformer $T_2$, is shifted by 0° or 180° in response to the modulating signal. The above-mentioned shifted carrier waves from the transformers $T_1$ and $T_2$ are applied to a 0° hybrid 32 to output a modulated wave having one of the four different phase positions of 0°, 90°, 180°, and 270° depending upon the modulating signal.

However, since there are differences between outputs from each of the 90° hybrid 30 and 0° hybrid 32, differences between the forward voltage drops of the diodes $D_3$ to $D_6$, and non-symmetry of the transformers $T_1$ and $T_2$, the phase positions of the waves modulated by the quadrature phase modulator shown in Figure 3 also have errors, and, furthermore, the amplitudes of the modulated waves in the phase positions are not equal to each other. That is, if a phase modulation system is constructed only by the quadrature phase modulator shown in Figure 3, the correct modulation charactersitics cannot be obtained as well as a system using only the quadrature phase modulator shown in Figure 2.

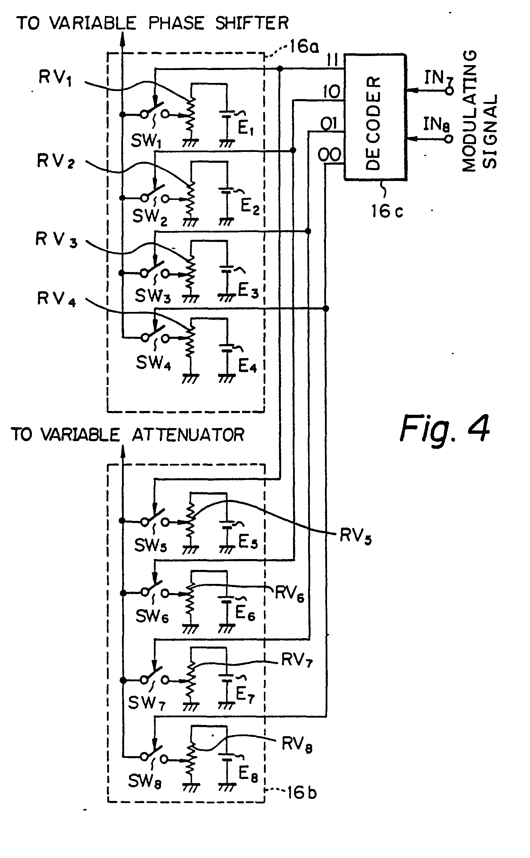

Figure 4 illustrates an example of the control signal generator 16 in Figure 1. In Figure 4, reference-numerals 16a and 16b denote voltage adjusting circuits which produce control signals for the variable phase shifter 10 and for the variable attenuator 12, respectively, and 16c denotes a decoder. The voltage adjusting circuit 16a has four potentiometers $RV_1$, $RV_2$, $RV_3$ and $RV_4$ and four electronic switches $SW_1$, $SW_2$, $SW_3$, and $SW_4$ connected to sliding contacts of the respective potentiometers $RV_1$, $RV_2$, $RV_3$, and $RV_4$. To each of the potentiometers $RV_1$, $RV_2$, $RV_3$, and $RV_4$, a constant d.c. voltage is supplied from respective voltage sources $E_1$, $E_2$, $E_3$, and $E_4$. Each of the electronic switches $SW_1$, $SW_2$, $SW_3$, and $SW_4$ is controlled by one of the outputs from the decoder 16c. The other voltage adjusting circuit 16b has the same constitution as the above voltage adjusting circuit 16a. The decoder 16c receives the two-bit modulating signal via input terminals $IN_7$ and $IN_8$ and decodes it to produce one of four outputs. If the modulating signal is "11", the H level output appears only at the output terminal indicated by "11" to close the electronic switch $SW_1$ and also an electronic switch $SW_5$. Thus, in this case, a voltage produced by the potentiometer $RV_1$ is applied to the variable phase shifter 10 as a control signal. Also, a voltage produced by a potentiometer $RV_5$ is applied to the variable attenuator 12 as a control signal. Namely, in accordance with the modulating signal, one of the potentiometers $RV_1$, $RV_2$, $RV_3$, and $RV_4$ is selected, and a voltage produced by the selected potentiometer is fed to the variable phase shifter 10. Similarly, one of potentiometers $RV_5$, $RV_6$, $RV_7$, and $RV_8$ is selected in accordance with the modulating signal, and a voltage produced by the selected potentiometer is fed to the variable attenuator 12. Each of the potentiometers $RV_1$ to $RV_8$ is preliminarily adjusted to produce a voltage which can control the variable phase shifter 10 or the variable attenuator 12 to appropriately correct the phase or the amplitude of the carrier wave. The detail procedure for adjusting the potentiometer will be described later.

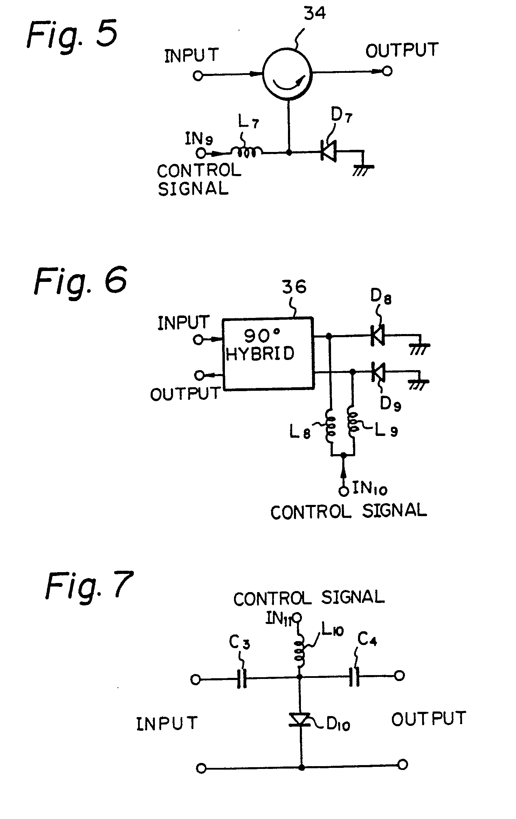

Figures 5 and 6 illustrate examples of the variable phase shifter 10 in Figure 1.

In the phase shifter shown in Figure 5, a varactor diode $D_7$ is provided between an intermediate port of a circulator 34 and ground. The capacitance of the varactor diode $D_7$ varies with the d.c. voltage applied thereto from the control signal generator 16 (Figure 1) via an input terminal $IN_9$ and a choke $L_7$. Thus, the phase of the reflected carrier wave is shifted in accordance with the d.c. voltage (control signal) from the control signal generator 16.

In the phase shifter shown in Figure 6, two varactor diodes $D_8$ and $D_9$ are provided between terminals of a 90° hybrid 36 and ground. The capacitance of the varactor diodes $D_8$ and $D_9$ varies with the d.c. voltage applied from the control signal generator 16 (Figure 1) via an input terminal $IN_{10}$ and chokes $L_8$ and $L_9$, respectively. Thus, the phase of the reflected carrier wave is shifted in accordance with the d.c. voltage (control signal) from the control signal generator 16.

Figure 7 illustrates an example of the variable attenuator 12 shown in Figure 1. A diode $D_{10}$ such as a PIN-diode is provided in a transmission line. The impedance of the diode $D_{10}$ varies with the d.c. current (control signal) fed from the control signal generator 16 (Figure 1) via an input terminal $IN_{11}$ and a choke $L_{10}$. In Figure 7, $C_3$ and $C_4$ denote capacitors for blocking the d.c. current.

The operation of the above-mentioned embodiment will now be described.

Before operating the phase modulation system, it is necessary to adjust the control signals. This adjustment is performed by adjusting the potentiometers $VR_1$ to $VR_8$ in the control signal generator 16 while maintaining the modulating signals at their respective values. For example, the potentiometers $RV_1$ and $RV_5$ are adjusted while the modulating signal is maintained at "11" so that the phase position of the modulated wave from the quadrature phase modulator 14 becomes equal to a desired position, for instance, a position of 0°, and the amplitude of the modulated wave becomes equal to a desired value. The potentiometers $RV_2$ and $RV_6$ are similarly adjusted while the modulating signal is maintained at "10". The remaining potentiometers $RV_3$ and $RV_7$ and also $RV_4$ and $RV_8$ are adjusted in a like manner.

As a result of the above-adjustment, during operation, the variable phase shifter 10 compensates for the errors in the phase positions induced by the quadrature phase modulator 14, and the variable attenuator 12 compensates for deviation of the amplitude induced by the quadrature phase modulator 14. Therefore, the phase of the modulated wave outputted from the phase modulation system of Figure 1 is exactly controlled to the desired phase positions, i.e., 0°, 90°, 180°, and 270°, and the amplitude of the modulated wave is also exactly controlled to a constant value.

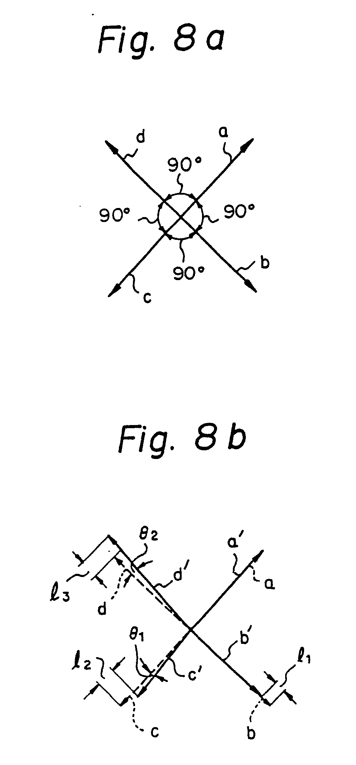

Figure 8a indicates desired modulated waves $a$, $b$, $c$ and $d$ having a phase interval of 90° and an amplitude of a constant value. On the other hand, Figure 8b indicates an example of actual modulated wave modulated by the quadrature phase modulator without correcting the phase and the amplitude. In Figure 8b, solid lines $a'$, $b'$, $c'$, and $d'$ denote the actual modulated waves and broken lines $a$, $b$, $c$, and $d$ denote the desired modulated waves. The actual modulated wave $b'$ has a deviation $l_1$ of the amplitude with respect to the desired modulation wave $b$. The actual modulated wave $c'$ has a deviation $l_2$ of the amplitude and an error $\theta_1$ of the phase with respect to the desired modulated wave $c$. The actual modulated wave $d'$ has a deviation $l_3$ of the amplitude and an error $\theta_2$ of the phase with respect to the desired modulated wave $d$. The control signals from the control signal generator 16, that is, the potentiometers $RV_5$ to $RV_8$, are preliminarily adjusted depending upon the deviations $l_1$, $l_2$, and $l_3$ of the amplitude. Thus these deviations, $l_1$, $l_2$, and $l_3$ at each phase position are compensated for by the variable attenuator 12. In a like manner, the errors $\theta_1$ and $\theta_2$ of the phase are compensated for by the variable phase shifter 10.

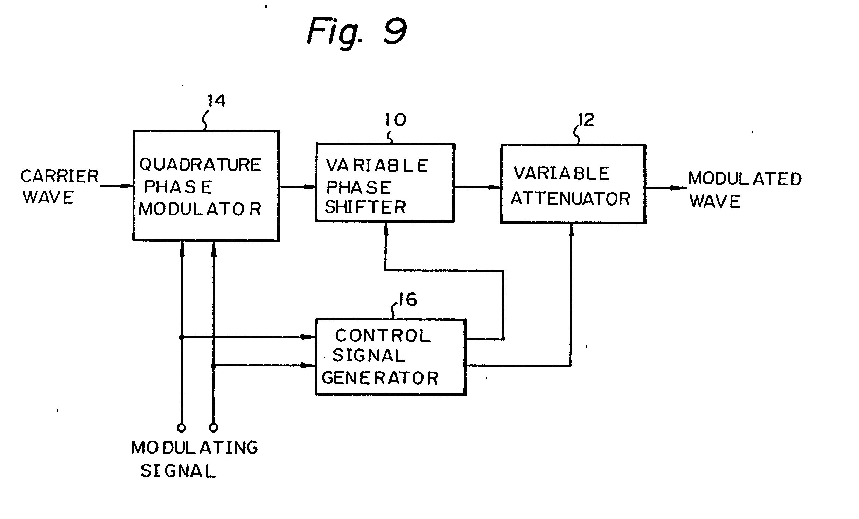

Figures 9 to 13 illustrate other embodiments of the present invention.

A second embodiment is shown in Figure 9, wherein the variable phase shifter 10 and the variable attenuator 12 are connected to the output of the quadrature phase modulator 14, so as to correct the phase and the amplitude of the modulated wave from the modulator 14. Otherwise, the constitution of this embodiment is the same as that of the first embodiment.

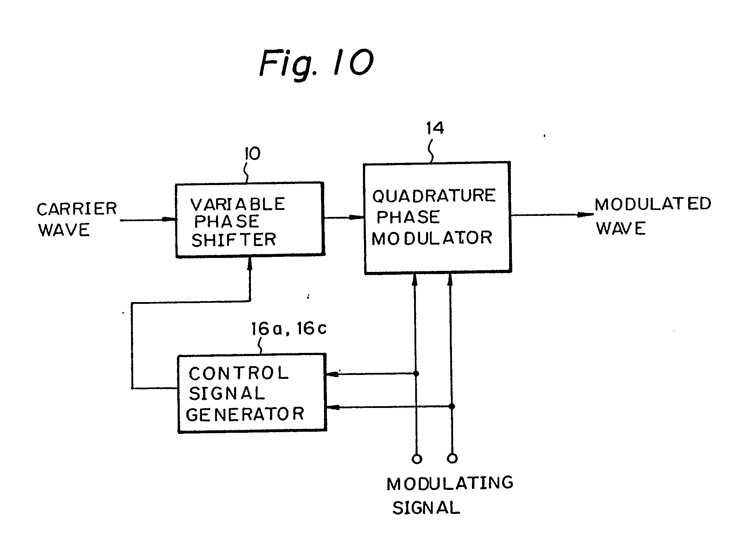

A third embodiment is shown in Figure 10. In this embodiment, the variable attenuator 12 in the first embodiment of Figure 1 is omitted. This embodiment is effective if the quadrature phase modulator 14 can produce modulated waves having the same amplitude at each phase position.

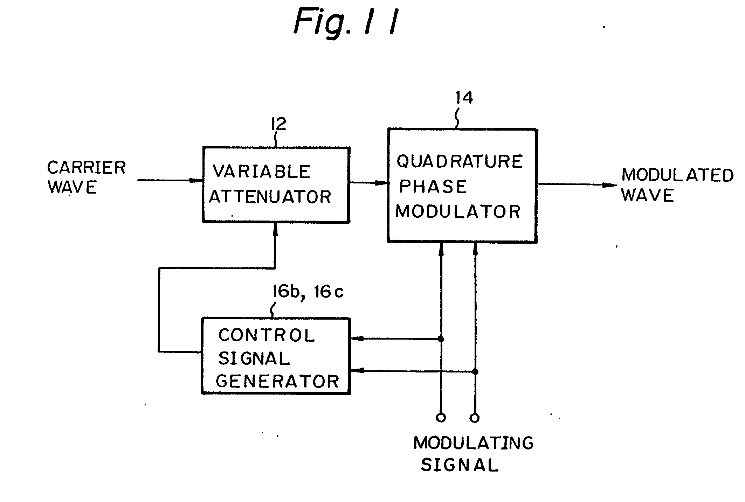

A fourth embodiment is shown in Figure 11. In this embodiment, the variable phase shifter 10 in the first embodiment of Figure 1 is omitted. The embodiment is used when the quadrature phase modulator 14 produces modulated waves with the phase positions exactly equal to the desired phase positions.

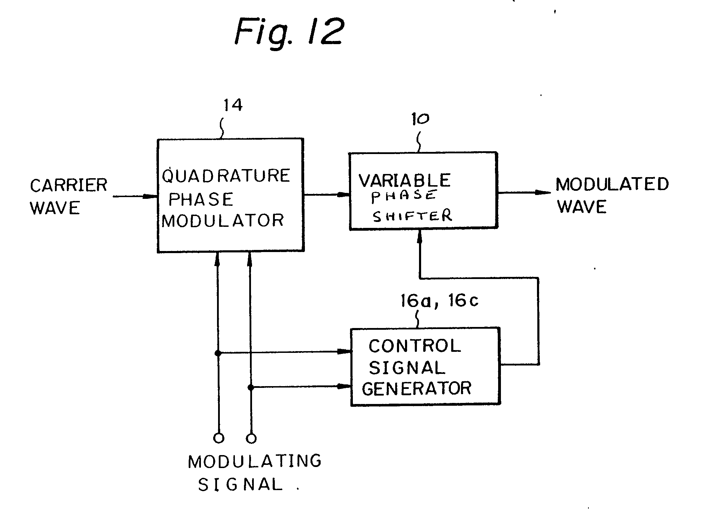

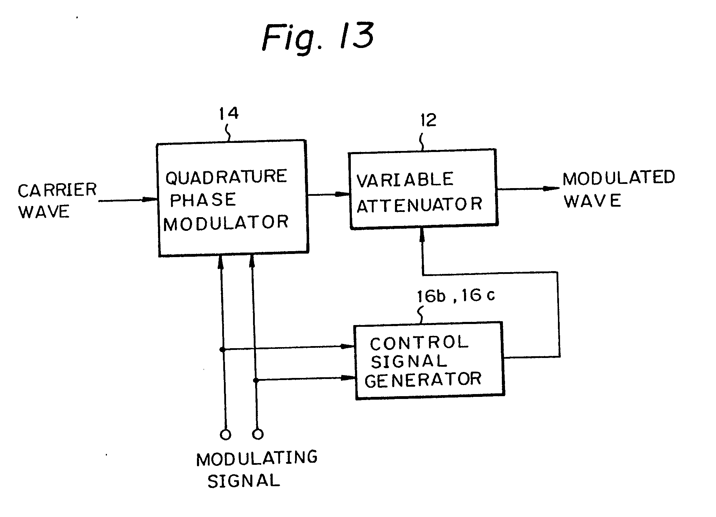

In the fifth and sixth embodiments shown in Figures 12 and 13, the variable phase shifter 10 or the variable attenuator 12 is connected to the output of the quadrature phase modulator 14 so as to correct the phase or the amplitude of the modulator wave from the modulator 14.

In the above-mentioned embodiments, the phase modulators are constituted by quadrature phase modulators so as to produce a modulated wave having four different phase positions. However, according to the present invention, the phase modulators may be constituted by other multiple phase modulators so as to produce a modulated wave having, for example, 8, 16, or 32 different phase positions.

According to the present invention, furthermore, the variable phase shifter may be constituted by a current-controlled variable phase shifter, and the variable attenuator may be constituted by a voltage-controlled variable attenuator. The control signals, of course, may be composed of voltage signals or current signals.

## Claims

1. A method of generating a phase modulated wave in which the phase of a carrier wave is modulated in accordance with a binary modulating signal ($IN_1$, $IN_2$) to produce the modulated wave, characterised by the step of correcting errors in the amplitude and/or phase of the modulated wave introduced during the modulation step by correcting the amplitude and/or the phase of the carrier wave or the modulated wave by predetermined amounts in response to the value of the binary modulating signal.

2. A method of generating a phase modulated wave in which the phase of a carrier wave is modulated in accordance with a binary modulating signal ($IN_1$, $IN_2$) to produce the modulated wave, characterised by the steps of producing, in response to the value of the binary modulating signal, at least one control signal; and correcting errors in the amplitude and/or phase of the modulated wave introduced during the modulation step by correcting, in accordance with the produced control signal or signals, the amplitude and/or the phase of the carrier wave or the modulated wave, whereby the phase position of the modulated waves becomes equal to one of a number of predetermined positions and the amplitudes of the modulated waves coincide.

3. A method as claimed in claim 2, characterised in that the producing step includes a step of selecting, in response to the value of the binary modulating signal ($IN_1$, $IN_2$), at least one control signal, the value of each control signal being preliminarily adjusted.

4. A method according to any of the preceding claims, characterised in that the correcting step comprises correcting both the amplitude and the phase of the carrier wave.

5. A method according to any of claims 1 to 3, characterised in that the correcting step comprises correcting both the amplitude and the phase of the modulated wave.

6. A method according to any of claims 1 to 3, characterised in that the correcting step comprises correcting the amplitude of the carrier wave or the modulated wave.

7. A method according to any of claims 1 to 3, characterised in that the correcting step comprises correcting the phase of the carrier wave or the modulated wave.

8. A phase modulation apparatus comprising modulator means (14) for modulating the phase of a carrier wave in accordance with a binary modulating signal ($IN_1$, $IN_2$) to produce a modulated wave; characterised by means (16) for producing, in response to the value of the binary modulating signal, at least one control signal; and means (12, 10), coupled to the modulator means and to the control signal producing means, for correcting the amplitude and/or the phase of the carrier wave or the modulated wave, in accordance with the control signal from the control signal producing means in order to compensate for errors in the amplitude and/or phase of the modulated wave introduced by the modulator means (14), whereby the phase position of the modulated waves becomes equal to one of a number of predetermined positions and the amplitudes of the modulated waves coincide.

9. Apparatus as claimed in claim 8, characterised in that the control signal producing means (16) includes means (16a, 16b) for selecting, in response to the value of the binary modulating signal ($IN_7$, $IN_8$), one or two control signals, the value of each of the control signals being preliminarily adjusted.

10. Apparatus as claimed in claim 8, characterised in that the correcting means (12, 10) includes means, connected to the input of the modulator means (14) for correcting, in accordance with the the produced control signals, both the amplitude and the phase of the carrier wave.

11. Apparatus as claimed in claim 10, characterised in that the correcting means includes a variable phase shifter (10) for shifting, in accordance with one of said produced control signals, the phase of the carrier wave; and a variable attenuator (12) for reducing, in accordance with the other one of the produced control signals, the amplitude of the carrier wave.

12. Apparatus as claimed in claim 8, characterised in that the correcting means includes means (12, 10) connected to the output of the modulator means, for correcting, in accordance with the produced control signals, both the amplitude and the phase of the modulated wave.

13. Apparatus as claimed in claim 12, characterised in that the the correcting means includes a variable phase shifter (10) for shifting, in accordance with one of the produced control signals, the phase of the modulator wave; and a variable attenuator (12) for reducing, in accordance with the other one of the produced control signals, the amplitude of the modulated wave.

14. Apparatus as claimed in claim 8, characterised in that the correcting means includes means (10), connected to the input or the output of the modulator means, for correcting, in accordance with the produced control signal, the phase of the carrier wave or the modulated wave respectively.

15. Apparatus as claimed in claim 8, characterised in that the correcting means include means, connected to the input or the output of said modulator means (12), for correcting, in accordance with the produced control signal, the amplitude of the carrier wave or the modulated wave respectively.

**Patentansprüche**

1. Verfahren zur Erzeugung einer phasenmodulierten Welle, bei welcher die Phase der Trägerwelle in Übereinstimmung mit einem binären modulierenden Signal (IN₁, IN₂) moduliert wird, um die modulierte Welle zu erzeugen, gekennzeichnet durch den Schritt der Korrektur von Fehlern in der Amplitude und/oder Phase der modulierten Welle, die während des Modulationsschrittes eingeführt werden, durch Korrigieren der Amplitude und/oder der Phase der Trägerwelle oder der modulierten Welle durch vorbestimmte Beträge, in Abhängigkeit von dem Wert des binären modulierenden Signals.

2. Verfahren zur Erzeugung einer phasenmodulierten Welle, bei der die Phase einer Trägerwelle in Übereinstimmung mit dem binären modulierenden Signal (IN₁, IN₂) moduliert wird, um eine modulierte Welle zu erzeugen, gekennzeichnet durch die Schritte der Erzeugung von wenigstens einem Steuersignal, in Abhängigkeit von dem Wert des binären modulierenden Signals; und Korrigieren von Fehlern in der Amplitude und/oder Phase der modulierten Welle, die während des Modulationsschrittes eingeführt werden, durch Korrigieren, in Übereinstimmung mit dem erzeugten Steuersignal oder den erzeugten Steuersignalen, der Amplitude und/oder der Phase der Trägerwelle oder der modulierten Welle, wodurch die Phasenposition der modulierten Wellen gleich einer von einer Anzahl von vorbestimmten Positionen wird und die Amplituden der modulierten Wellen konizidieren.

3. Verfahren nach Anspruch 2, dadurch gekennzeichnet, daß der Erzeugungsschritt den Schritt der Auswahl, in Abhängigkeit von dem Wert des binären modulierenden Signals (IN₁, IN₂), von wenigstens einem Steuersignal umfaßt, wobei der Wert von jedem Steuersignal vorläufig eingestellt wird.

4. Verfahren nach einem der vorhergehenden Ansprüche, dadurch gekennzeichnet, daß der korrigierende Schritt das Korrigieren sowohl der Amplitude als auch der Phase der Trägerwelle umfaßt.

5. Verfahren nach einem der Ansprüche 1 bis 3, dadurch gekennzeichnet, daß der korrigierende Schritt sowohl das Korrigieren der Amplitude als auch der Phase der modulierten Welle umfaßt.

6. Verfahren nach einem der Ansprüche 1 bis 3, dadurch gekennzeichnet, daß der korrigierende Schritt das Korrigieren der Amplitude der Trägerwelle oder der modulierten Welle umfaßt.

7. Verfahren nach einem der Ansprüche 1 bis 3, dadurch gekennzeichnet, daß der korrigierende Schritt das Korrigieren der Phase der Trägerwelle oder der modulierten Welle umfaßt.

8. Phasenmodulationsvorrichtung mit Modulatoreinrichtungen (14) zum Modulieren der Phase einer Trägerwelle in Übereinstimmung mit einem binären modulierenden Signal (IN₁, IN₂), um eine modulierte Welle zu erzeugen; gekennzeichnet durch Einrichtungen (16) zum Erzeugen, in Abhängigkeit von dem Wert des binären modulierenden Signals, von wenigstens einem Steuersignal; und Einrichtungen (10, 12), die mit der Modulatoreinrichtung und der Steuersignal - Erzeugungseinrichtung gekoppelt sind, um die Amplitude und/oder die Phase der Trägerwelle oder der modulierten Welle zu korrigieren, in Übereinstimmung mit dem Steuersignal von der Steuersignalerzeugungseinrichtung, um Fehler in der Amplitude und/oder Phase der modulierten Welle zu kompensieren, die durch die Modulatoreinrichtung (14) eingeführt werden, wodurch die Phasenposition der modulierten Wellen gleich einer von einer Anzahl von vorbestimmten Positionen wird und die Amplituden der modulierten Wellen koinzidieren.

9. Vorrichtung nach Anspruch 8 dadurch gekennzeichnet, daß die Steuersignal - Erzeugungseinrichtung (16) Einrichtungen (16a, 16b) umfaßt, zum Auswählen, in Abhängigkeit von dem Wert des binären modulierenden Signals

(IN$_7$, IN$_8$), von einem oder zwei Steuersignalen, wobei der Wert von jedem der Steuersignale vorläufig eingestellt wird.

10. Vorrichtung nach Anspruch 8, dadurch gekennzeichnet, daß die korrigierenden Einrichtungen (12, 10) Einrichtungen umfassen, die mit dem Eingang der Modulatoreinrichtung (14) verbunden sind, um, in Übereinstimmung mit den erzeugten Steuersignalen, sowohl die Amplitude als auch die Phase der Trägerwelle zu korrigieren.

11. Vorrichtung nach Anspruch 10, dadurch gekennzeichnet, daß die korrigierenden Einrichtungen einen variablen Phasenschieber (10) umfassen, zum Verschieben der Phase der Trägerwelle in Übereinstimmung mit einem der genannten Steuersignale; und einen variablen Dämpfer (12) zum Reduzieren der Amplitude der Trägerwelle in Übereinstimmung mit dem anderen der erzeugten Steuersignale.

12. Vorrichtung nach Anspruch 8, dadurch gekennzeichnet, daß die korrigierenden Einrichtungen Einrichtungen (12, 10) umfassen, die mit dem Ausgang der Modulatoreinrichtung verbunden sind, um sowohl die Amplitude als auch die Phase der modulierten Welle, in Übereinstimmung mit den erzeugten Steuersignalen, zu korrigieren.

13. Verfahren nach Anspruch 12, dadurch gekennzeichnet, daß die korrigierenden Einrichtungen einen variablen Phasenschieber (10) umfassen, um, in Übereinstimmung mit einem der erzeugten Steuersignale, die Phase der modulierten Welle zu verschieben; und einen variablen Dämpfer (12) zum Reduzieren der Amplitude der modulierten Welle, in Übereinstimmung mit dem anderen der erzeugten Steuersignale.

14. Vorrichtung nach Anspruch 8, dadurch gekennzeichnet, daß die korrigierenden Einrichtungen Einrichtungen (10) umfassen, die mit dem Eingang oder dem Ausgang der Modulatoreinrichtung verbunden sind, zum Korrigieren der Phase der Trägerwelle bzw. der modulierten Welle in Übereinstimmung mit dem erzeugten Steuersignal.

15. Vorrichtung nach Anspruch 8, dadurch gekennzeichnet, daß die korrigierenden Einrichtungen Einrichtungen umfassen, die mit dem Eingang oder dem Ausgang der Modulatoreinrichtung (12) verbunden sind, zum Korrigieren, in Übereinstimmung mit dem erzeugten Steuersignal, der Amplitude der Trägerwelle bzw. der modulierten Welle.

**Revendications**

1. Procédé pour produire une onde modulée en phase, selon lequel la phase d'une onde porteuse est modulée en fonction d'un signal modulateur binaire (IN$_1$, IN$_2$) pour produire l'onde modulée, caractérisé en ce que l'étape de correction des erreurs d'amplitude et/ou de phase de l'onde modulée introduites au cours de la modulation est effectuée en corrigeant l'amplitude et/ou la phase de l'onde porteuse ou de l'onde modulée à l'aide de valeurs prédéterminées en réponse à la valeur dudit signal modulateur binaire.

2. Procédé pour produire une onde modulée en phase selon lequel la phase de l'onde porteuse est modulée en fonction d'un signal modulateur binaire (IN$_1$, IN$_2$) pour produire l'onde modulée, caractérisé en ce qu'il comprend les étapes de:— production, en réponse à la valeur dudit signal modulateur, d'au moins un signal de commande; —et de correction des erreurs d'amplitude et/ou de phase de l'onde modulée introduites au cours de l'étape de modulation, en corrigeant, en fonction du ou des signaux de commande produits, l'amplitude et/ou la phase de l'onde porteuse ou de l'onde modulée, ce qui identifie la position de phase des ondes modulées avec l'une d'un certain nombre de positions prédéterminées, et fait ainsi coïncider les amplitudes des ondes modulées.

3. Procédé selon la revendication 2, caractérisé en ce que l'étape de production comporte une étape de sélection, en réponse à la valeur du signal modulateur binaire (IN$_1$, IN$_2$), d'au moins un signal de commande, la valeur de chaque signal de commande étant réglée au préalable.

4. Procédé selon l'une quelconque des revendications précédentes, caractérisé en ce que, lors de l'étape de correction, on corrige à la fois l'amplitude et la phase de l'onde porteuse.

5. Procédé selon l'une quelconque des revendications 1 à 3, caractérisé en ce que, lors de l'étape de correction, on corrige à la fois l'amplitude et la phase de l'onde modulée.

6. Procédé selon l'une quelconque des revendications 1 à 3, caractérisé en ce que, lors de l'étape de correction, on corrige l'amplitude de l'onde porteuse ou de l'onde modulée.

7. Procédé selon l'une quelconque des revendications 1 à 3, caractérisé en ce que, lors de l'étape de correction, on corrige la phase de l'onde porteuse ou de l'onde modulée.

8. Dispositif de modulation de phase comportant un moyen modulateur (14) pour moduler la phase d'une onde porteuse en fonction d'un signal modulateur binaire (IN$_1$, IN$_2$) pour produire une onde modulée, caractérisé en ce qu'il comporte en outre: un moyen (16) pour produire en réponse à la valeur du signal modulateur binaire au moins un signal de commande; et des moyens (10, 12) couplés au moyen modulateur et au moyen pour produire un signal de commande, pour corriger l'amplitude et/ou la phase de l'onde porteuse ou de l'onde modulée, en fonction du signal de commande provenant du moyen pour produire ce signal en vue de compenser les erreurs d'amplitude et/ou de phase de l'onde modulée introduites par le moyen modulateur (14), de sorte que la position de phase des ondes modulées devient égale à l'une parmi un certain nombre de positions prédéterminées et les amplitudes des ondes modulées coïncident.

9. Dispositif selon la revendication 8, caractérisé en ce que le moyen pour produire le signal de commande (16), comporte des moyens (16a, 16b) pour sélectionner en réponse à la valeur du signal modulateur binaire (IN₇, IN₈), un ou deux signaux de commande, la valeur de chacun des signaux de commande étant réglée au préalable.

10. Dispositif selon la revendication 8, caractérisé en ce que le moyen de correction (12, 10) comporte un moyen connecté à l'entrée du moyen modulateur (14) pour corriger, en fonction des signaux de commande produits, à la fois l'amplitude et la phase de l'onde porteuse.

11. Dispositif selon la revendication 10, caractérisé en ce que le moyen de correction comporte un déphaseur variable (10) pour décaler en fonction de l'un desdits signaux de commande produits, la phase de l'onde porteuse; et un atténuateur variable (12) pour réduire en fonction de l'autre des signaux de commande produits, l'amplitude de l'onde porteuse.

12. Dispositif selon la revendication 8, caractérisé en ce que le moyen de correction comporte des moyens (12, 10) connectés à la sortie du moyen modulateur, pour corriger en fonction des signaux de commande produits à la fois l'amplitude et la phase de l'onde modulée.

13. Dispositif selon la revendication 12, caractérisé en ce que le moyen de correction comporte un déphaseur variable (10) pour décaler, en fonction de l'un des signaux de commande produits, la phase de l'onde modulée; et un atténuateur variable (12) pour réduire en fonction de l'autre des signaux de commande produits, l'amplitude de l'onde modulée.

14. Dispositif selon la revendication 8, caractérisé en ce que le moyen de correction comporte un moyen (10) connecté à l'entrée ou à la sortie du moyen modulateur, pour corriger, en fonction du signal de commande produit, respectivement la phase de l'onde porteuse ou de l'onde modulée.

15. Dispositif selon la revendication 8, caractérisé en ce que le moyen de correction comporte un moyen, connecté à l'entrée ou à la sortie dudit moyen modulateur (12) pour corriger, en fonction du signal de commande produit, respectivement l'amplitude de l'onde porteuse ou de l'onde modulée.

# Fig. I

Fig. 2

CARRIER WAVE

MODULATED WAVE

20

22

D₁  L₁

D₂  L₂

24

26

L₃

IN₃

L₄

IN₄

MODULATING SIGNAL

Fig. 3

CARRIER WAVE

30

90° HYBRID

R₁

T₁

D₃

D₄

C₁

T₂

D₅

D₆

C₂

IN₆  IN₅

MODULATING SIGNAL

L₅

L₆

32

0° HYBRID

MODULATED WAVE

R₂

EP 0 107 980 B1

Fig. 4

Fig. 5

Fig. 6

Fig. 7

# Fig. 8 a

# Fig. 8 b

Fig. 9

CARRIER
WAVE →

14
QUADRATURE
PHASE
MODULATOR

10
VARIABLE
PHASE
SHIFTER

12
VARIABLE
ATTENUATOR

→ MODULATED
WAVE

16
CONTROL
SIGNAL
GENERATOR

MODULATING
SIGNAL

EP 0 107 980 B1

# Fig. 10

EP 0 107 980 B1

```
                                          14
                                          (

CARRIER     ┌──────────┐          ┌──────────────┐
WAVE        │ VARIABLE │          │ QUADRATURE   │   MODULATED
──────────→ │  PHASE   │ ───────→ │   PHASE      │ ─────────→ WAVE
            │ SHIFTER  │          │ MODULATOR    │
            └──────────┘          └──────────────┘
                 ↑ 10                  ↑      ↑
                 │                     │      │
                 │                     │      │
          ┌──────────────┐            │      │
          │  CONTROL     │ ←──────────┘      │
          │  SIGNAL      │ ←─────────────────┘
          │  GENERATOR   │
          └──────────────┘
             16a, 16c       │      │
                            ○      ○
                         MODULATING
                           SIGNAL
```

## Fig. 1 1

# Fig. 12

CARRIER
WAVE →

14

QUADRATURE
PHASE
MODULATOR

10

VARIABLE
PHASE
SHIFTER

→ MODULATED
WAVE

16a, 16c

CONTROL
SIGNAL
GENERATOR

MODULATING
SIGNAL .

# Fig. 13

CARRIER WAVE →

14
QUADRATURE PHASE MODULATOR

12
VARIABLE ATTENUATOR → MODULATED WAVE

16b, 16c
CONTROL SIGNAL GENERATOR

MODULATING SIGNAL

EP 0 107 980 B1